Europäisches Patentamt

European Patent Office

Office européen des brevets

(11) Publication number: **0 295 137**
**A1**

(12) # EUROPEAN PATENT APPLICATION

(21) Application number: **88305347.2**

(22) Date of filing: **10.06.88**

(51) Int. Cl.⁴: **H 04 N 9/31**
**G 02 F 1/13**

(30) Priority: **12.06.87 JP 147507/87**

(43) Date of publication of application:
**14.12.88 Bulletin 88/50**

(84) Designated Contracting States: **DE FR GB**

(71) Applicant: **SHARP KABUSHIKI KAISHA**
**22-22 Nagaike-cho Abeno-ku**
**Osaka 545 (JP)**

(72) Inventor: **Matoba, Hirotsugu**
**46, Hashinaka**
**Sakurai-shi Nara-ken (JP)**

**Kurata, Yukio**
**148-1, Kidono-cho**
**Tenri-shi Nara-ken (JP)**

(74) Representative: **Brown, Kenneth Richard et al**
**R.G.C. Jenkins & Co. 26 Caxton Street**
**London SW1H 0RJ (GB)**

(54) Liquid crystal projection apparatus.

(57) A liquid crystal projection apparatus comprising, as means for separating beams of light and/or means for optically combining beams of light, a compound prism (18, 19, 20) or prisms having at least two dichroic reflection surfaces (D, G) for different wavelengths and an air layer formed therein for providing total reflection surfaces.

FIG. 1

EP 0 295 137 A1

Description

## LIQUID CRYSTAL PROJECTION APPARATUS

BACKGROUND OF THE INVENTION

The present invention relates to a liquid crystal projection apparatus being small and lightweight and capable of controlling each color light of additive primaries (red, green, blue) using at least three sheets of matrix-driven liquid crystal panels and additively mixing light of these colors in desired proportions.

The liquid crystal projection apparatus is such as uses a liquid crystal display panel of a dot matrix type for displaying a picture image and projecting the displayed image by the liquid crystal display panel onto the surface of a screen by means of a projection lens. As color liquid crystal projection apparatus for projecting a color image, one as shown in FIG. 3 (Japanese Laid-open Patent No. 61-150487) is known. Referring to the figure, a beam of white light from a light source 100 is turned into a parallel beam by a lens 101 and then separated by a dichroic mirror assembly 102 into blue, green, and red. At this time, the dichroic mirror assembly 102 is made up of a blue mirror 103 for reflecting light of blue component and a red mirror 104 for reflecting color of red component. The separated blue light and red light are controlled by mirrors 105, 106 in their advancing directions so that the blue light, green light, and red light are put in parallel with one another. In optical paths of the blue light, green light, and red light, there are provided liquid crystal display devices 107, 108, 109 of an active matrix type. The active matrix type liquid crystal display devices 107, 108, and 109 are respectively supplied with information signals of blue color, green color, and red color out of an external picture signal, and operate so that the blue light, green light, and red light are modulated for contrast. Beams of light 110, 111, 112 transmitted through the liquid crystal devices modulated by the blue color, green color, and red color information signals are again combined by optical means such as mirrors 113, 114 and half mirrors 115, 116, and projected onto a screen 118 by means of a projection lens 117.

In the aforementioned prior art system having a large number of mirrors, it is very difficult to adjust their optical axes. And, since the half mirrors for combining the beams of light transmitted through the liquid crystal devices are of a plate form, they are liable to be distorted by heat generated by the light source and others, and therefore it becomes difficult to obtain a clear picture. Further, since there are used a large number of mirrors and other parts, the apparatus becomes large in size.

SUMMARY OF THE INVENTION

The present invention was made in view of the above mentioned problems and accordingly has an object to provide a small-sized and lightweight liquid crystal projection apparatus being simple in structure, easy for adjustment of optical axes, and enduring the effect of heat.

The present invention, in a liquid crystal projection apparatus comprising an optical system for separating a beam of light emitted from a light source for projection into three primaries of light, blue, green, and red light, by means of dichroic mirrors and others, active matrix type liquid crystals panels provided in optical paths of the blue, green, and red light for modulating their respective intensities of light, and optical system for combining the beams of light transmitted through the liquid crystal panels, and a projection lens for projecting a composite image onto a screen, uses an integrally constructed compound dichroic prism in the optical system for combining the beams of light transmitted through the liquid crystal panels.

According to the present invention, it is achieved to provide a small-sized and lightweight liquid crystal projection apparatus having features that adjustment of optical axes is easy because the optical system for combining the beams of light transmitted through liquid crystal panels has been constituted of an integrally constructed compound dichroic prism, that the system produces no distortion under heat because of the use of the prism therein, and that the wavelength shift of the dichroic characteristic due to variation in angle of incidence at the time when converging or diverging bundle of rays are incident is restrained, color purity is kept good, and uneven brightness is not occurring, because the number of parts used is decreased and the angles of incidence on reflecting surfaces and transmitting surfaces with dichroic characteristic are arranged to be small.

BRIEF DESCRIPTION OF THE DRAWINGS

The present invention will become more fully understood from the detailed description given hereinbelow and the accompanying drawings which are given by way of illustration only, and thus are not limitative of the present invention and wherein:

FIG. 1 is a constructional drawing showing an embodiment of a liquid crystal projection apparatus according to the present invention;

FIG. 2 is a constructional drawing showing another embodiment of the present invention; and

FIG. 3 is a constructional drawing showing a prior art example.

DESCRIPTION OF THE PREFERRED EMBODIMENTS

An embodiment of the present invention will be described below with reference to the drawing.

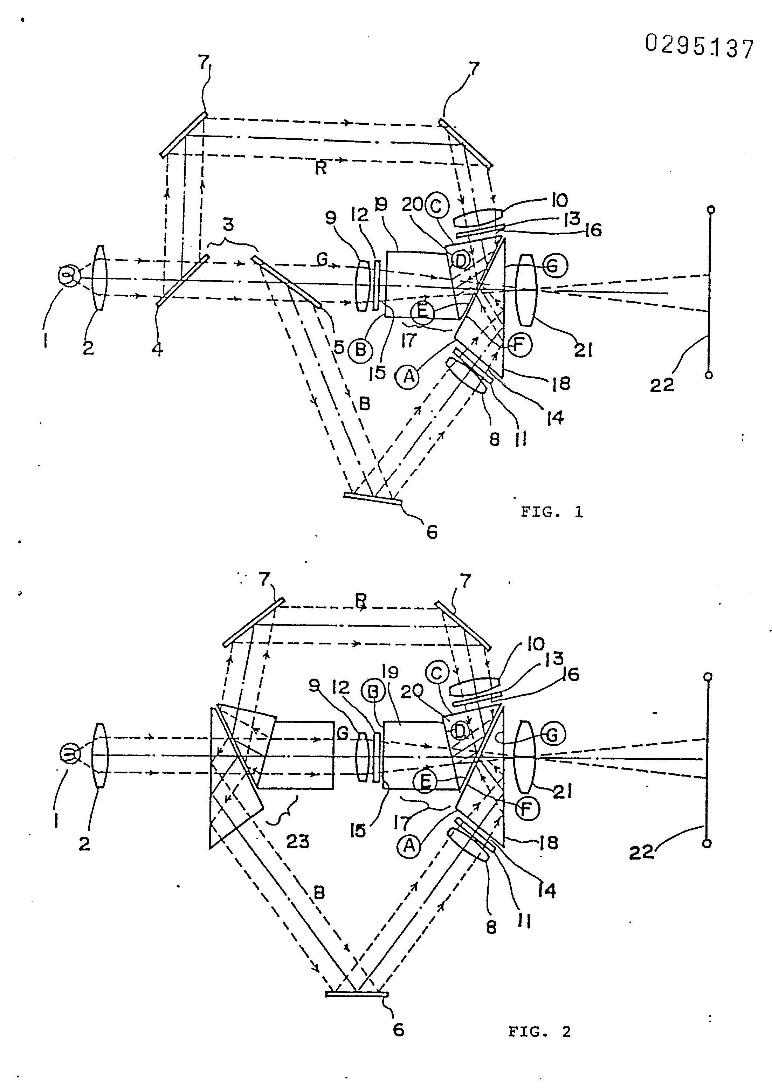

FIG. 1 is a constructional drawing showing important sections of a liquid crystal projection apparatus according to the present invention. A beam of light from a light source 1 emitting white light is made into parallel beam by lens 2 and separated into blue color B, green color G, and red color R by means of a dichroic mirror assembly 3. The dichroic mirror assembly 3 here is made up of an R-reflecting dichroic mirror 4 reflecting light of red component and a B- reflecting dichroic mirror 5 reflecting light of blue component. The separated blue light and red light are controlled in their advancing directions by mirrors 6 and 7 so that the optical axes of the blue light, green light, and red light are put in agreement with normal lines to surfaces A, B, and C of a later described compound dichroic prism 17. The blue light, green light, and red light are passed, respectively, through condenser lenses 8, 9, and 10 and active matrix type liquid crystal panels 11, 12, and 13 disposed at the back of the same. The active matrix type liquid crystal panel 11 disposed in the optical path of the blue color is supplied with an electrical signal dependent on blue picture information out of external picture information and operates so that the contrast of the blue light is modulated by transmittance to light of the liquid crystal forming each picture element changing in response to the signal. The active matrix type liquid crystal panels 12, 13 disposed in the optical paths of the green light and red light also operate so that contrasts of the green light and red light are modulated by green picture information and red picture information out of the external picture information. Transmitted light 14, 15, 16 through the liquid crystal panels with their contrasts modulated thereby are introduced into the compound dichroic prism 17. The compound dichroic prism 17 is formed of three prisms, a B-prism 18, G-prism 19, and an R-prism 20, of which the G-prism 19 and R-prism 20 are closely adhered together through an R-reflecting dichroic surface D, which reflects light of red component, and the B-prism 18 is disposed with its surface F arranged in parallel with the surface E of the R-prism 20 through an air layer therebetween. A B-reflecting dichroic surface of G of the B-prism 18 reflects light of blue component. The B-prism 18, G-prism 19, and the R-prism 20 are integrally supported in a holder (not shown).

Now description will be made of the R-reflecting dichroic surface D and the B-reflecting dichroic surface G. The dichroic surface is that deposited on the prism by such a process as vacuum evaporation and formed of multilayer thin films of transparent non-metallic materials such as $CsO_2$ and $MgF_2$ having different film thicknesses and refractive indexes, and the same, making use of the phenomenon of interference of light, operates as a reflecting surface selectively reflecting a portion of the visible region and letting the remaining portion transmit therethrough.

What should be observed in the use of the dichroic surface is that the angle of incidence thereon needs to be designed to be as small as possible because, when the angle of incidence is large, the state of interference of light therein greatly varies with only a small change in the angle of incidence and it causes a wavelength shift of the dichroic characteristic.

In the above mentioned embodiment, by designing the angle of incidence on the R-reflecting dichroic surface D to be, for example, as small as 13°, and the angle of incidence on the B-reflecting dichroic surface G to be, for example, as small as 25.5°, the wavelength shift of the dichroic characteristic with change in the angle of incidence due to deviation of the optical axis can be restrained, and thereby, a practical system which needs no strict adjustment of the optical axis can be obtained.

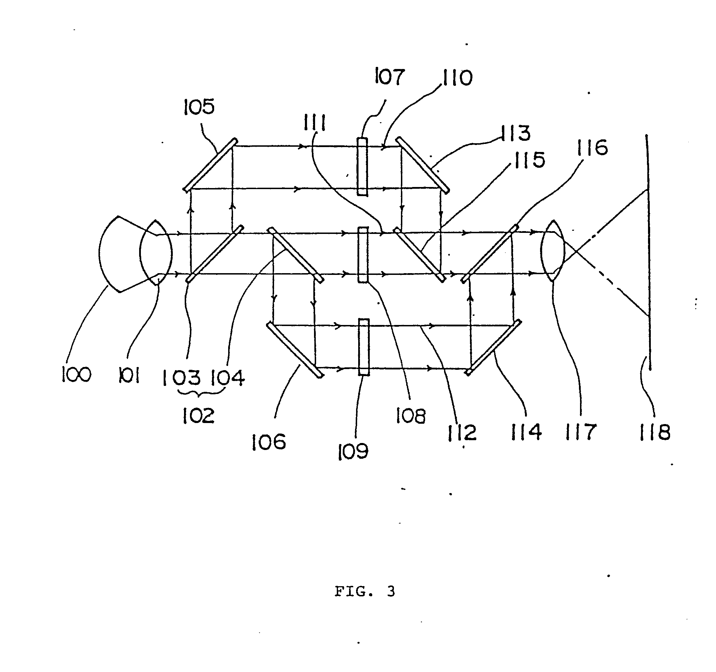

Further, while adjustments had to be made in 11 positions for eight mirrors and three active matrix type liquid crystal display devices in the prior art optical system as shown in FIG. 3, the positions where adjustments are required is reduced to nine positions of five mirrors, three active matrix type liquid crystal display devices, and one compound dichroic prism.

With the aforementioned construction, the transmitted light 14 through the liquid crystal panel and thereby modulated for contrast for blue color by blue picture information is introduced to the surface A of the compound dichroic prism 17 such that its optical axis coincides with the normal line thereto, reflected by the B-reflected dichroic surface G, totally reflected by the surface F because the angle of incidence on the surface F is larger than the critical angle, and passes through the B-reflecting dichroic surface G because the angle of incidence thereon becomes virtually 90°. The transmitted light 15 through the liquid crystal panel and thereby modulated for contrast for green light by green picture information is introduced to the surface B of the compound dichroic prism 17 such that its optical axis coincides with the normal line thereto and passes through the R-reflecting dichroic surface D, surface E, surface E, and the B-reflecting dichroic surface G. The transmitted light 16 through the liquid crystal panel and thereby modulated for contrast for red light by red picture information is introduced to the surface C of the compound dichroic prism 17 such that its optical axis coincides with the normal line thereto, totally reflected by the surface E because the angle of the incidence on the surface E is larger than the critical angle, reflected again by R-reflecting dichroic surface D, and passes through the surface E, surface F, and the B-reflecting dichroic surface G. The transmitted light 14, 15, 16 through their respective liquid crystal panels are combined when passing through the B-reflecting dichroic surface G such that their two-dimensionally arrangements of picture elements register with one another and projected through the projection lens 21 onto the screen 22.

FIG. 2 shows another embodiment of the present invention in which a compound dichroic prism 23 is used in place of the dichroic mirror assembly 3 in the above described embodiment and the other arrangement is the same as that in the above described embodiment. Incidentally, even if the compound dichroic prism 17 in the present configuration is replaced by a conventional optical system, regular functions and effects can be obtained.

According to the present invention as described so far, the optical system for combining three beams of light transmitted through and modulated by their respective three active matrix type liquid crystal panels driven in response to a blue picture signal, green picture signal, and a red picture signal out of an external picture signal can be provided only by one integrally structured compound dichroic prism, and therefore it is made possible to decrease the number of parts. Also, adjustments of optical axes become easier than before. Further, by designing such that the angles of incidence of the transmitted beams through liquid crystal panels on the dichroic surfaces of the compound dichroic prism are kept small, the wavelength shift of the dichroic characteristic due to change in the angle of incidence produced when converging of diverging bundle of rays are introduced can be restrained, the color purity is kept good, uneven brightness is prevented from occurring, and strict accuracy becomes unnecessary for adjustments of optical axes whereby adjustments are made easy. Further, since the optical system for combining the beams of light transmitted through liquid crystal panels is provided by a prism, it produces only small deformation under heat from the light source, and thus a clear picture image free from distortion can be obtained.

While only certain embodiments of the present invention have been described, it will be apparent to those skilled in the art that various changes and modifications may be made therein without departing from the spirit and scope of the present invention as claimed.

There are described above novel features which the skilled man will appreciate give rise to advantages. There are each independent aspects of the invention to be covered by the present application, irrespective of whether or not they are included within the scope of the following claims.

**Claims**

1. A liquid crystal projection apparatus comprising, as means for separating beams of light and/or means for optically combining beams of light, a compound prism or prisms having at least two dichroic reflection surfaces for different wavelengths and an air layer formed therein for providing total reflection surfaces.

2. The apparatus according to claim 1, further comprising light separating means for separating white light from a single light source into light of three red, green, and blue components, liquid crystal panels disposed in optical paths for the light of three red, green, and blue components separated by said light separating means for modulating contrasts in said light of three components, optical combining means for combining the light of three components passed through said liquid crystal panels, and display means for displaying the combined beams of light by said optical combining means.

3. A colour optical projection apparatus in which a plurality of beams (R,G,B) of different colour light are separately controlled in accordance with respective colour components of an image to be projected by the apparatus, the controlled beams being combined by a beam combining means (18, 19, 20) to form a composite projection beam, characterised in that one or each of said beam combining means (18, 19, 20) and a beam separating means (23) which may be provided for forming said plurality by beams from an input source beam comprises an optical arrangement including a prism (18, 19, 20; 23) having at least one surface (F, D) which internally reflects light of a first said beam and transmits light of a second said beam.

4. A colour optical projection apparatus according to claim 3 characterised in that each of said plurality of light beam is controlled by means of a respective liquid crystal panel (11, 12, 13) driven by control signals representative of a respective one of said colour components.

0295137

FIG. 1

FIG. 2

0295137

FIG. 3

| | DOCUMENTS CONSIDERED TO BE RELEVANT | | EP 88305347.2 |
|---|---|---|---|
| Category | Citation of document with indication, where appropriate, of relevant passages | Relevant to claim | CLASSIFICATION OF THE APPLICATION (Int. Cl.4) |
| X,P | GB - A - 2 191 057 (PHILIPS)<br>* Fig. 1,2; page 2, line 3 - page 3, line 15 * | 1-4 | H 04 N 9/31<br>G 02 F 1/13 |
| A | US - A - 3 659 918 (TAN) | | |

|  | TECHNICAL FIELDS SEARCHED (Int. Cl.4) |
|---|---|
|  | H 04 N 5/00 |
|  | H 04 N 9/00 |
|  | G 02 F 1/00 |
|  | G 02 B 27/00 |

The present search report has been drawn up for all claims

| Place of search | Date of completion of the search | Examiner |
|---|---|---|
| VIENNA | 13-09-1988 | BENISCHKA |